(19) Europäisches Patentamt

European Patent Office

Office européen des brevets

(11) Publication number: **0 512 629 A2**

## (12) EUROPEAN PATENT APPLICATION

(21) Application number: **92201224.0**

(22) Date of filing: **04.05.92**

(51) Int. Cl.⁵: **C08K 13/06**, C08K 9/10, C08L 75/00

(30) Priority: **07.05.91 US 696673**

(43) Date of publication of application:
**11.11.92 Bulletin 92/46**

(84) Designated Contracting States:
**BE DE ES FR GB IT NL**

(71) Applicant: **AKZO N.V.**
**Velperweg 76**
**NL-6824 BM Arnhem(NL)**

(72) Inventor: **Wienckoski, Ronald John**
**823 North Pennsylvania Avenue**
**Morrisville, Pennsylvania 19067(US)**

(74) Representative: **Schalkwijk, Pieter Cornelis et al**
**Akzo N.V. Patent Department P.O. Box 9300**
**NL-6800 SB Arnhem(NL)**

(54) **Non-halogen containing flame retardant system for thermoplastic polymers.**

(57) A flame retardant composition, especially suitable for use in flame retarding polyurethane compositions, comprises 60%-80% of encapsulated ammonium polyphosphate, 10%-30% of an inorganic metal oxide flame retardant, such as zinc borate, and 5%-10% of a char-forming compound, such as pentaerythritol

EP 0 512 629 A2

BACKGROUND OF THE INVENTION

The present invention relates to a non-halogen containing flame retardant for polyurethane compositions.

Ammonium polyphosphate, a known flame retardant in paints, has been proposed as a flame retardant for polyurethane and other polymer materials for a number of years. One early disclosure is contained in J. Cellular Plastics, Dec. 1967, pp. 539-546 where it is proposed that rigid urethane foams based on the polyoxypropylene adduct of sucrose as a polyol source be flame retarded with about 14 parts by weight of ammonium polyphosphate per 100 parts by weight of polyol. U.S. Patent No. 3,423,343 to J. C. Barnett describes use of ammonium polyphosphate as a flame retardant for polyurethane foamed materials. This patent also contains a vague disclosure at Col. 4, line 61 and following about including other flame retardants including other phosphorus-containing materials, halogen-containing materials, antimony-and boron-containing compounds and inert reinforcing materials.

U.S. Patent No. 4,542,170 to D. R. Hall et al. describes intumescent flame retarded polyurethane compositions which contain a mixture of a nitrogen-containing phosphate (e.g., ammonium polyphosphate) and a pentate salt (e.g., a pentate salt of amino-s-triazine). An optional aryl phosphate flame retardant and plasticizer can also be used for the liquid system described therein.

U.S. Patent No. 4,670,483 to D. R. Hall et al. also relates to flame retarded polyurethanes containing a combination of pentate salt and phosphate (e.g., ammonium polyphosphate) with an aryl phosphate being used as a third, optional flame retardant.

Japanese Patent Publication No. 01/40588 illustrates flame retardant foamed polyurethane compositions comprising 150-300 parts by weight of inorganic flame-retarding materials which include zinc borate, ammonium polyphosphate, and the like for every 100 parts by weight of a curable polyurethane composition (polyol plus polyisocyanate).

Certain additional disclosures exist in the art in regard to combinations of ammonium polyphosphate and inorganic metal oxide flame retardants. For example, U.S. Patent No. 4,395,511 mentions use of a 3:1:3 weight ratio of decabromodi-phenyl oxide, antimony oxide, and ammonium polyphosphate to flame retard thermoplastic polyurethane polymers. U.S. Patent No. 4,853,424 advocates a flame retardant system consisting of ammonium polyphosphate and aluminum hydroxide.

U.S. Patent No. 4,324,835 teaches the use of an intumescent component comprising a "carbonific" element (e.g., a polyhydric material of high carbon content, such as pentaerythritol) and a "spumific" element (e.g., an inorganic acid or precursor, such as ammonium polyphosphate) to treat a latex or urethane-based foam.

Other disclosures which relate to the use of non-encapsulated ammonium polyphosphate as a flame retardant include:

1. U.S. Patent No. 4,009,137 describes intumescent flame retardant coating compositions which contain 10-30 wt% of a carbonaceous substance and 12-30 wt% of ammonium polyphosphate;

2. U.S. Patent No. 4,216,261 describes compositions containing ammonium polyphosphate, tripentaerythritol and melamine;

3. U.S. Patent No. 4,774,268 describes compositions comprising 10-50 wt% of a phenol and/or melamine-formaldehyde condensation product, 5-50 wt% pentaerythritol, and 5-50 wt% of dicyandiamide.

4. U.S. Patent No. 4,808,476 mentions an additive component of an intumescent composition comprising materials which provide a source of phosphorus, zinc, boron and an expansion gas upon thermal decomposition. The source of phosphorus can be ammonium polyphosphate. Melamine is identified as the expansion gas source. Zinc borate is one described source of zinc, and boric acid is a source of boron. The Example shows a two package composition which, upon combination of 2.3 parts by weight of the first package and 1 part by weight of the second package, would yield a composition containing a lesser amount of ammonium polyphosphate than the combined amount of inorganic metal oxide material (e.g., antimony oxide and zinc borate) and char forming component (e.g., pentaerythritol).

5. U.S. Patent No. 4,871,795 mentions use of ammonium polyphosphate as a "gasing" agent in a silicone oil/silicone resin-containing flame retardant additive composition which can also contain a polyhydric alcohol (e.g., pentaerythritol) as an additive to promote char formation.

U.S. Patent No. 4,166,743 describes coating compositions which contain a film-forming agent, ammonium polyphosphate, one or more substances which are carbonizable under the action of heat (e.g., pentaerythritol), a dispersant, (optionally) one or more fillers, and at least one salt containing water of crystallization in order to activate the ammonium polyphosphate. Non-resinous (non-film forming) compositions are clearly not contemplated by this patent.

## SUMMARY OF THE INVENTION

The present invention comprises the use, as a non-resinous flame retardant composition, of a major amount of encapsulated ammonium polyphosphate and a minor amount of a mixture of an inorganic metal oxide flame retardant and a polyhydric char-forming compound. The flame retardant composition has been found to be especially useful in the flame retarding of polyurethane materials.

## DETAILED DESCRIPTION OF THE INVENTION

The polymer systems to which the flame retardant composition of the present invention can be applied include such thermoplastic polymers as polyester and polyether polyurethanes, the polyolefins (polyethylene and polypropylene) and elastomers (EPDM). It is especially useful in the flame retarding of polyurethane materials.

The polyurethane component of one preferred embodiment of the present invention can be selected from conventional polyurethane materials known to persons of ordinary skill in the art. Although the instant invention is useful in polyester polyurethane systems, it is preferred for use in polyether polyurethane systems which are more difficult to flame retard. The polyurethane component will comprise from about 50% to about 60%, by weight of the entire composition. The polyurethane component is preferably a previously formed resin so that the components that are identified in more detail below only need to be physically mixed. These components are preferably in solid rather than liquid form.

The encapsulated ammonium polyphosphate flame retardant component used herein is present in minor amount (i.e., at less than 50% by weight of the entire polyurethane composition). Preferred levels of use range from about 30% to about 40%, by weight. Representative examples of encapsulated ammonium polyphosphate which can be used are known to persons in the art (e.g., see U.S. Patent Nos. 4,347,334, 4,467,056, 4,514,328, and 4,639,331). Such ammonium polyphosphates contain a hardened, water insoluble resin enveloping the individual ammonium polyphosphate particles. The resin may be a phenol-formaldehyde resin, an epoxy resin, or a melamine-formaldehyde resin. Especially preferred for use is the encapsulated ammonium polyphosphate flame retardant available under the trademark EXOLIT 462 from Hoechst Celanese Corporation, Somerville, N.J. This product is a melamine-formaldehyde encapsulated ammonium polyphosphate additive containing about 10 wt% encapsulating material (melamine-formaldehyde resin). European Patent Publication No. 180,795 describes its process of manufacture.

The flame retardant additive used herein also contains a lesser amount of an inorganic metal oxide flame retardant as compared to the amount of encapsulated ammonium polyphosphate. The term "inorganic metal oxide flame retardant", as used herein, is to be construed as covering those inorganic metal oxide compounds whose metal cation can comprise a metal such as zinc, antimony, aluminum, or the like and whose anion can include such oxygen-containing moieties as hydroxy, borate, oxide, and the like. Representative flame retardants from this generic class include zinc borate (which is preferred), antimony trioxide, alumina trihydrate, and the like. The amount of such flame retardant can range up to about 15%, e.g., from about 5% to about 15% by weight of the entire composition.

The third essential component of the fire retardant component used in accordance with the present invention is a polyhydric char-forming compound. Polyhydric materials of relatively high carbon content are useful and include such compounds as pentaerythritol, starch, sugars, sorbitol, and the like. This polyhydric char-forming additive is preferably present at from about 3% to about 5%, by weight, of the entire composition of polymer and flame retardant component.

The flame retardant mixture described hereinbefore, which does not contain a resinous, film forming component, is believed to be novel. If the relative weight amounts of the three components were to be expressed based on the total weight of the flame retardant package alone they would be as follows: encapsulated ammonium polyphosphate - about 60% to about 80%; inorganic metal oxide flame retardant - about 10% to about 30%; and polyhydric char-forming compound - about 5% to about 10%.

The aforementioned preferred three component blend of ammonium polyphosphate, inorganic metal oxide flame retardant and polyhydric char-forming compound can advantageously also contain other additives in relatively smaller amount (e.g., generally below about 3%-10% by weight). For example, fillers (e.g., titania, glass spheres, heat stabilizers, colorants, etc.) can be used.

The present invention is further illustrated by the Examples which follow.

Example Nos. 1-6

The samples given below were prepared using a Brabender Plasticorder mixer equipped with an electrically heated roller mixing head. The polyurethane (either ether or ester) was charged to the mixer and was allowed to flux. The flame retardants (e.g., ammonium polyphosphate (EXOLIT 462 brand), zinc borate, pentaerythritol, etc.) and other ingredients were then added over a period of 2-3 minutes to the polymer mass. The materials were then allowed to mix for an additional eight minutes. The temperature in the Brabender mixer was 175oC.

The semi-molten polymer was then removed from the mixing head and compression molded into a plaque of the desired thickness. The press was set at 350oC (both platens), and the molding was carried out over a period of 4-5 minutes. The plaques were then cooled and cut into the proper size for testing. The samples for testing were allowed to age for 24 hours before test work began. The results obtained are reported below (Example 1 is a control and Examples 2-6 are in accordance with the invention).

| Ingredient | 1 | 2 | 3 | 4 | 5 | 6 |
|---|---|---|---|---|---|---|
| Polyether Polyurethane | 53.0 | 50.0 | 50.0 | 50.0 | 50.0 | 50.0 |
| Ammonium Polyphosphate | 47.0 | 38.33 | 38.33 | 32.0 | 35.0 | 38.33 |
| Zinc Borate | - | 6.67 | 6.67 | 3.0 | 10.0 | 6.67 |
| Pentaerythritol | - | 4.00 | 3.75 | 4.0 | 4.0 | 3.75 |
| TiO$_2$ | - | 1.00 | 1.00 | 1.0 | 1.0 | 1.00 |
| Organozirconate Stabilizer* | - | - | .25 | - | - | - |
| Organozirconate Stabilizer** | - | - | - | - | - | 0.25 |

* Tris(2-ethylene-diamino-ethanolato)zirconium (IV) neoalkanolato/silicon, available as KEN-REACT CAPOW NZ 44/H from Kenrich Petrochemicals, Inc.
** 65% organo-zirconate, $ROZr[OP(O)(OC_8H_{17})Z]_3$, and 35% hydroxylated silicon dioxide, available as KEN-REACT CAPOW NZ 12/H from Kenrich Petrochemicals Inc.

UL-94 flame retardancy tests were run at 70-75 mil thickness with the times given being before the water immersion test described below. In the test, the samples were held twice in flame for ten seconds and the time to extinguishment after each was measured when the sample was removed from the flame. The figure before the dash indicates the first extinguishment time in seconds, whereas that given after the dash indicates the second extinguishment time in seconds. A V-O rating requires: (A) not having any of the specimens burning with flaming combustion for more than ten seconds after either application of the test flame; (B) not having a total flaming combustion time exceeding fifty seconds for the ten flame applications for each set of five specimens; (C) not having any of the specimens burning with flaming or glowing combustion up to the holding clamp; (D) not having any specimens which drip flaming particles which ignite the dry absorbent surgical cotton located twelve inches (305 mm) below the test specimen; and (E) not having any specimens with glowing combustion which persists beyond thirty seconds after the second removal of the test flame.

4

| Example No. | Results |
|---|---|
| 1 (Control) | 0 - 3.44 + +<br>1.0 - 4.13<br>1.0 - 4.24 + + |
| 2 | 1.0 - 2.0<br>1.0 - 2.75<br>1.0 - 3.10<br>1.1 - 3.15<br>0.7 - 3.70 |
| 3 | 1.0 - 2.33 +<br>1.0 - 5.75<br>1.0 - 4.10<br>1.0 - 3.90 + |
| 4 | 1.0 - 3.44<br>1.13 - 2.84<br>1.12 - 5.83<br>2.5 - 3.62 |
| 5 | 1.0 - 3.13<br>1.0 - 2.90<br>1.12 - 4.75<br>2.35 - 3.75 |
| 6 | 1.15 - 1.95<br>0.95 - 5.16<br>0.9 - 1.71<br>1.04 - 1.63<br>1.02 - 2.12 |

+ - drips did not ignite cotton.
+ + - ignited cotton.

The samples from Example 1 were V-2, V-0 and V-2, respectively, whereas all of the samples for Examples 2-6 were all V-0.

The samples were then subjected to a water immersion test which comprised of putting the strips (totally immersed) into a beaker of regular tap water for a period of two weeks and then performing the UL-94 test again.

The samples were then retested after water immersion in accordance with UL-94 with the following results:

| Example No. | Results |
|---|---|
| 1 (Control) | 1.2 - 4.83 + + <br> 3.2 - 1.72 <br> 1.0 - 3.74 + + |
| 2 | 1.0 - 9.0 <br> 1.0 - 1.0 <br> 0.5 - 0.6 <br> 0.65 - 1.0 |
| 3 | 1.0 - 3.1 <br> 1.0 - 2.3 <br> 1.2 - 1.47 <br> 1.1 - 1.56 |
| 4 | 1.2 - 1.3 <br> 1.2 - 2.89 <br> 1.3 - 2.63 <br> 1.2 - 2.91 |
| 5 | 1.1 - 1.27 <br> 1.2 - 3.90 <br> 1.1 - 3.75 <br> 1.1 - 3.25 |
| 6 | 2.06 - 1.8 <br> 1.2 - 3.09 <br> 1.84 - 2.01 <br> 1.2 - 2.21 |

The samples from Example 1 were V-2, V-0 and V-2, respectively, while all the samples from Examples 2-6 were V-0. The samples containing the fire retardant of this invention maintained the elasticity for the polyurethane to a substantial extent. The formulations were not as brittle as one would expect with such a high loading of solids.

The Limiting Oxygen Index (LOI) for the sample of Example 2 was 56. None of the others were tested for their LOI values.

EXAMPLE 7

The following polyester polyurethane composition produced a V-0 rating (UL-94) at a thickness of 70-75 mils:

| | Component Parts by Weight |
|---|---|
| Polyester Urethane (ESTANE 58277) | 50.0 |
| Ammonium Polyphosphate (EXOLIT 462) | 38.25 |
| Zinc Borate (FIREBREAK 2B) | 6.75 |
| Pentaerythritol | 4.0 |
| Titanium Oxide (white) | 1.0 |

The foregoing Examples are presented for illustrative purposes only and should not therefore be construed in a limiting sense. The scope of protection sought is set forth in the claims which follow.

**Claims**

1. A solid, non-resinous flame retardant composition comprising a major amount of encapsulated ammonium polyphosphate and a minor amount of a blend of an inorganic metal oxide flame retardant and a polyhydric char-forming compound.

2. A composition as claimed in Claim 1 wherein the ammonium polyphosphate comprises from about 60% to about 80%, by weight of the composition.

3. A composition as claimed in Claim 1 wherein the metal oxide comprises from about 10% to about 30%, by weight of the composition, and the char-forming compound comprises from about 5% to about 10%, by weight of the composition.

4. A composition as claimed in Claim 3 wherein the metal oxide is zinc borate.

5. A composition as claimed in Claim 3 wherein the char-forming compound is pentaerythritol.

6. A composition as claimed in Claim 1 which comprises from about 60% to about 80%, by weight of ammonium polyphosphate, from about 10% to about 30%, by weight of zinc borate, as the metal oxide, and from about 5% to about 10%, by weight of pentaerythritol, as the char-forming compound.

7. A polyurethane composition containing an effective amount for flame retardancy of a flame retardant composition according to any one of the claims 1-6.

8. A thermoplastic polymer composition containing an effective amount for flame retardancy of a flame retardant composition according to any one of the claims 1-6.